(19) **Europäisches Patentamt / European Patent Office / Office européen des brevets**

(11) **EP 1 481 498 B1**

(12) **EUROPEAN PATENT SPECIFICATION**

(45) Date of publication and mention
of the grant of the patent:
**14.03.2007 Bulletin 2007/11**

(21) Application number: **03706742.8**

(22) Date of filing: **25.02.2003**

(51) Int Cl.:
*H04B 7/08* (2006.01)   *H04B 7/06* (2006.01)

(86) International application number:
**PCT/GB2003/000829**

(87) International publication number:
**WO 2003/073647 (04.09.2003 Gazette 2003/36)**

(54) **IMPROVED DIVERSITY RADIO COMMUNICATIONS DEVICE**

VERBESSERTE DIVERSITÄTS-FUNKKOMMUNIKATIONSVORRICHTUNG

DISPOSITIF DE RADIOCOMMUNICATION EN DIVERSITE AMELIOREE

(84) Designated Contracting States:
**AT BE BG CH CY CZ DE DK EE ES FI FR GB GR HU IE IT LI LU MC NL PT SE SI SK TR**

(30) Priority: **26.02.2002 US 83100**

(43) Date of publication of application:
**01.12.2004 Bulletin 2004/49**

(73) Proprietor: **Nortel Networks Limited**
**St Laurent, Québec H4S 2A9 (CA)**

(72) Inventors:
• **SMITH, Martin**
**Chelmsford, Essex CM1 4XQ (GB)**
• **KITCHENER, Dean**
**Brentwood, Essex CM15 9DX (GB)**
• **AMOS, Sonya**
**Bishops Stortford, Herts CM22 6DP (GB)**
• **POWER, Dawn**
**Bishops Stortford, Herts CM23 4DT (GB)**
• **YU, Dong-Sheng**
**Ottawa, Ontario K2G 5Y9 (CA)**
• **MA, Jianglei**
**Kanata, Ontario K2M 2W5 (CA)**
• **JIA, Ming**
**Ottawa, Ontario K2A 0B3 (CA)**
• **ZHU, Peiying**
**Kanata, Ontario K2M 2L4 (CA)**
• **TONG, Wen**
**Ottawa, Ontario K2C 4A7 (CA)**

(74) Representative: **Loisel, Bertrand et al**
**Cabinet Plasseraud**
**52 rue de la Victoire**
**75440 Paris Cedex 09 (FR)**

(56) References cited:
WO-A-00/64006        WO-A-02/07258
WO-A-97/28615        US-A- 5 159 707
US-A- 5 991 643

• **GORE D ET AL: "Space-time block coding with optimal antenna selection" 2001 IEEE INTERNATIONAL CONFERENCE ON ACOUSTICS, SPEECH, AND SIGNAL PROCESSING. PROCEEDINGS (CAT. NO. 01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, pages 2441-2444 vol.4, XP002243702 2001, Piscataway, NJ, USA, IEEE, USA ISBN: 0-7803-7041-4**
• **HEATH R W JR ET AL: "Antenna selection for spatial multiplexing systems based on minimum error rate" ICC 2001. IEEE INTERNATIONAL CONFERENCE ON COMMUNICATIONS. CONFERENCE RECORD (CAT. NO.01CH37240), PROCEEDINGS OF INTERNATIONAL CONFERENCE ON COMMUNICATIONS, HELSINKI, FINLAND, 11-14 JUNE 2001, pages 2276-2280 vol.7, XP002243703 2001, Piscataway, NJ, USA, IEEE, USA ISBN: 0-7803-7097-1**

**Description**

## FIELD OF THE INVENTION

The present invention relates to a radio communications device. The invention is particularly related to multiple-input multiple-output radio communications.

## BACKGROUND TO THE INVENTION

The demand for wireless communication systems has grown steadily over recent decades, and has included several technological jumps over this time, particularly in the area of cellular and wireless local area network (WLAN) communication systems. Analogue cellular phones have been replaced with digital handsets using for example GSM and CDMA technologies, and so called third generation systems such as UMTS are now being introduced. Similarly WLAN technologies such as HyperLan and IEEE 802.11b are also being introduced. The number of users continues to increase and data traffic is now becoming an important part of the wireless network. Both of these factors mean that it is important for operators to look for methods of increasing the capacity of their networks to meet future demands.

As well as the need to increase capacity there is a general requirement to keep costs and power consumption down whilst providing good performance. For example, costs for basestation and user terminal equipment should be reduced where possible whilst still enabling satisfactory wireless services to be provided.

One performance related problem relates to multipath fading. Typically basestations and user terminals are located in "cluttered" environments. This means that communications signals arrive at such basestations or user terminals via many paths because of scattering due to reflections and diffractions from buildings, furniture or other objects in the environment.

Incoming scattered signals can add constructively or destructively depending on the relative amplitude and phase of the different components. This means that the received signal at the basestation or user terminal varies considerably in magnitude depending on the relative location of the basestation, user terminal and other objects in the environment. This effect is known as multipath fading.

Previously, one way of addressing multipath fading has been to use transmit or receive antenna diversity. Receive antenna diversity involves transmitting from one transmit antenna whilst providing two or more diverse receive antennas (e.g. with spatial or polarisation diversity). By using diverse antennas uncorrelated signals are received at those antennas. When one of those signals is in a fade the other is typically unfaded. In the case of switched antenna diversity, one of the receive antennas is selected for reception at any one time. Alternatively, adaptive combination is used in conjunction with all the receive antennas to produce one channel output. Thus in the ideal situation, the receive antennas can always be used to obtain an unfaded signal.

A similar situation occurs for transmit diversity. Here two or more diverse transmit antennas are used in conjunction with one receive antenna. Feedback about receive performance is used to either select one of the transmit antennas to use at a particular time, or to adjust adaptive combination of the transmit antennas to create one channel output. The present invention seeks to provide improved capacity and performance as compared with such known transmit and receive diversity antenna arrangements.

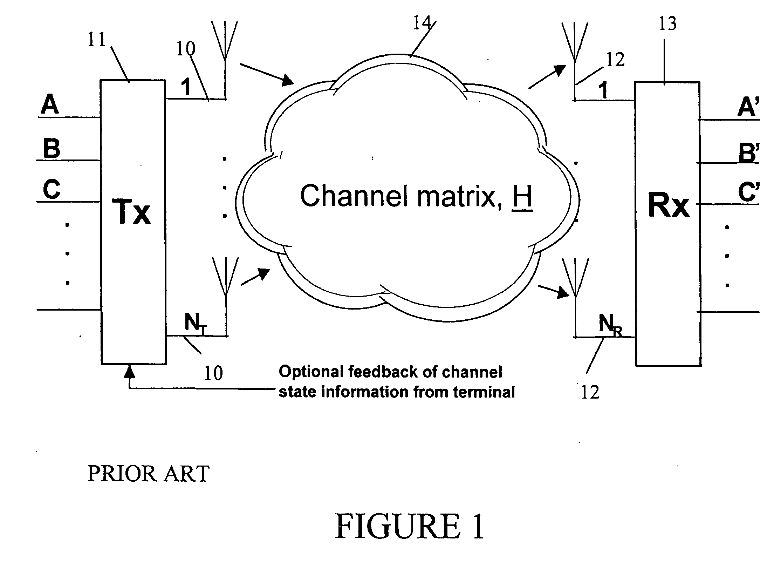

Another known approach for increasing capacity involves using multiple-input multiple-output (MIMO) communications systems to increase data rates. A MIMO wireless communications system (see Figure 1) is one which comprises a plurality of antennas 10 at the transmitter 11 and two or more antennas 12 at the receiver 13. The antennas 10, 12 are employed in a multi-path rich environment such that due to the presence of various scattering objects (buildings, cars, hills, etc.) in the environment, each signal experiences multipath propagation. Thus a cloud shape 14 is shown in Figure 1 to represent the scattered signals between the transmit and receive antennas. User data is transmitted from the transmit antennas using a space-time coding (STC) transmission method as is known in the art. The receive antennas 12 capture the transmitted signals and a signal processing technique is then applied as known in the art, to separate the transmitted signals and recover the user data.

MIMO wireless communication systems are advantageous in that they enable the capacity of the wireless link between the transmitter and receiver to be improved compared with previous systems in the respect that higher data rates can be obtained. The multipath rich environment enables multiple orthogonal channels to be generated between the transmitter and receiver. Data for a single user can then be transmitted over the air in parallel over those channels, simultaneously and using the same bandwidth. Consequently, higher spectral efficiencies are achieved than with non-MIMO systems.

However, one problem with known MIMO arrangements is that they are relatively expensive in the respect that multiple antennas are required together with multiple transmit and receive chains. One receive antenna is used for each MIMO channel. Thus, for example, a receive MIMO antenna arrangement can comprise four antennas together with four receive chains one for each of those antennas. Receive chains are relatively expensive, bulky and power must be provided to each of those receive chains. This is particularly disadvantageous for user terminals that are required to be compact and also for basestations which need to be unobtrusive. Similar problems occur for transmit chains.

WO9728615A describes an apparatus and method for a cellular radio telephone base station. It uses an antenna array which may include multiple individually mounted antennas or sub arrays spaced to achieve enhanced communications quality through spatial diversity reception. A signal processing means produces at least three signals from energy received at the antenna array. A signal selecting means selects at least two but less than all of the at least three processed signals.

US5991643 describes a radio transceiver housing a plurality of switchable antennas. The apparatus comprises a housing with at least one patch antenna on the housing. Each patch antenna is connected to a separate antenna switch. The antenna switches are switched on and off to achieve different antenna combinations.

US5159707 describes a diversity receiver for receiving broadcast radio signals. In some embodiments, the receiver has a plurality of tuners and fewer tuners than antennas. An output is taken from one of the tuners at any time.

An object of the present invention is to provide a radio communications device which overcomes or at least mitigates one or more of the problems noted above.

Further benefits and advantages of the invention will become apparent from a consideration of the following detailed description given with reference to the accompanying drawings, which specify and show preferred embodiments of the invention.

## SUMMARY OF THE INVENTION

According to an aspect of the present invention, there is provided a radio communications device comprising three or more diverse antennas and a plurality of receive chains, there being fewer receive chains than antennas, said radio communications device further comprising a selector which is arranged to select, for each of the plurality of receive chains, any one of the antennas for use in conjunction with that receive chain, the radio communications device being characterised in that it is arranged to provide multiple-input multiple-output communications using the plurality of receive chains. This provides the advantage that costs are reduced and space is saved and provides the advantage that increased data rates are provided in addition to the cost and space reduction.

Advantageously the antennas each have directionality. This provides the advantage that carrier to interference levels are improved when considering a plurality of the devices in a communications network.

The device may be either a basestation or a user terminal and in a preferred example, a user terminal is provided such as a mobile telephone, a personal digital assistant, a laptop computer, a personal computer or a subscriber station installed at a customer premises.

Advantageously, the device comprises a selector arranged to select for each receive chain any one of the antennas for use in conjunction with that receive chain. For example, switched antenna selection can be used. This provides the advantage that spatial fading can be avoided by selecting different one of the antennas at different times enabling increases in capacity to be achieved. This is particularly advantageous for nomadic or mobile user terminals used in cluttered environments where spatial fading occurs.

Several antenna selection criteria are identified in conjunction with MIMO channel prediction for both nomadic and high speed mobility applications.

In a particularly preferred embodiment the selector is arranged to select on the basis of a parameter related to a cyclic redundancy check process. We found that this method of selection was particularly effective and provided significant improvements in performance especially for high speed mobility applications.

Fast antenna search arrangements are identified to make the best selection whilst minimizing computational complexity.

By further arranging the selector to select for each receive chain any one of the antennas not currently selected for use then further improvements in performance are found. This also applied for the transmit situation.

In another embodiment the radio communications device comprises four pairs of antennas each pair of antennas being supported from a body which is sized and shaped such that it is suitable to be hand held and supported on a substantially flat surface. This compact arrangement is portable and can easily be connected to a user terminal such as a personal computer.

Preferably the body is a parallelepiped and each pair of antennas is supported from a different face of said parallelepiped. This gives directionality to each pair of antennas by virtue of their position on the body. The antennas are preferably dipoles.

The invention also encompasses a radio communications network comprising a radio communications device as described above. Preferably, the network comprises a plurality of user terminals each being a radio communications device as described above and wherein each of said antennas at those user terminals is arranged to provide a directional antenna beam. In this way carrier to interference levels are improved as compared to situations using omnidirectional antennas.

According to another aspect of the present invention there is provided a method of operating a radio communications device comprising three or more diverse antennas, a plurality of receive chains and a selector, wherein there are fewer receive chains than antennas, the method comprising selecting, for each receive chain, any one of the antennas for use in conjunction with that receive chain and the method being characterised by using outputs of the plurality of receive chains to provide multiple-input multiple-output communications.

The preferred features may be combined as appropriate, as would be apparent to a skilled person, and may be combined with any of the aspects of the invention.

## BRIEF DESCRIPTION OF THE DRAWINGS

In order to show how the invention may be carried into effect, embodiments of the invention are now described below by way of example only and with reference to the accompanying figures in which:

Figure 1 is a schematic diagram of a prior art MIMO wireless communications system;

Figure 2a is a schematic diagram of a prior art receive diversity antenna arrangement;

Figure 2b is a schematic diagram of an embodiment of the present invention using transmit or receive diversity in either a MIMO or a non-MIMO system;

Figure 3 is a schematic diagram of a MIMO configuration according to an embodiment of the present invention;

Figure 4 is a graph of eigenvalue distributions for standard 2:2 MIMO and eigenvalue selection diversity (best 2 from 4) using the maximum sum of eigenvalues as the selection metric;

Figure 5 is a schematic diagram of a MIMO switching receiver architecture;

Figure 6 illustrates possible switching configurations for two situations namely, (4 antennas, 2 receive chains) and (6 antennas, 2 receive chains);

Figure 7 illustrates processing in a MIMO system and selection metrics used for antenna switched selection;

Figure 8 is a graph of bit error rate against signal to noise ratio for various antenna switched selection methods;

Figure 9 is a graph of simulation results comprising the gain for a 4-antenna and 2-receive chain selection arrangement compared to a true 2x2 MIMO and 2x4 MIMO arrangement. The upper-bound of the gain for the selection from 4, 6 and 8 antennas is computed based on Equation 50. Results are shown for a user equipment moving at 30 km/h (left most column of each pair) and at 100 km/h (right most column of each pair).

Figures 10 and 11 each show an antenna arrangement for use with a stand alone user equipment;

Figure 12 is a table of performance measures for the antenna arrangements of figures 10 and 11;

Figure 13 shows an antenna arrangement for use in a personal digital assistant;

Figure 14 shows directional antenna patterns for use with the antenna arrangement of Figure 16;

Figure 15 is a schematic diagram of a MIMO user equipment having adaptive combination.

## DETAILED DESCRIPTION OF INVENTION

Embodiments of the present invention are described below by way of example only. These examples represent the best ways of putting the invention into practice that are currently known to the Applicant although they are not the only ways in which this could be achieved.

The term "receive chain" is used to refer to any part of apparatus which processes radio frequency signals received at a receiver by downconverting those signals to baseband frequency. This involves many stages of filtering, demodulation and downconversion as known in the art. Thus the term "receive chain" is used herein to refer to either all the apparatus needed for this conversion process or only some of that apparatus.

The term "transmit chain" is used to refer to any part of apparatus which processes baseband signals and converts those to radio frequency signals for transmission at a transmitter. This involves many stages of upconverting, modulation and power amplification as known in the art. Thus the term "transmit chain" is used herein to refer to either all the apparatus needed for this conversion process or only some of that apparatus.

As mentioned above, previous MIMO systems have used as many MIMO channels as antennas. One receive chain (also referred to as a radio frequency receiver) per channel is required and this poses a practical restriction because the number of receive chains that can be provided in practice is limited by cost, complexity and power consumption in a basestation, user terminal or other communications device. This same limitation applies in the case of transmit chains. A similar practical restriction applies to non-MIMO radio communications devices such as those using transmit or receive diversity.

The present invention recognises this problem and enables the number of receive or transmit chains to be reduced whilst still increasing the number of antennas. That is, more receive antennas are used than receive chains (or more transmit antennas than transmit chains). For both MIMO and non-MIMO arrangements many benefits are achieved in this way including increases in capacity, improved carrier to interference levels, reduced costs and improved ability to cope with multipath fading. It is acknowledged that prior art transmit or receive diversity antenna arrangements are known with more receive antennas than receive chains for example. However, these have involved using a plurality of diverse antennas and producing a *single* channel output from those diverse antennas, by switched selection. The present invention recognises that additional benefits can be achieved by producing two *or more* channels of output from those diverse antennas. In this case, three or more diverse antennas must be used. These benefits include an improved ability to cope with multipath fading and improved receive gain.

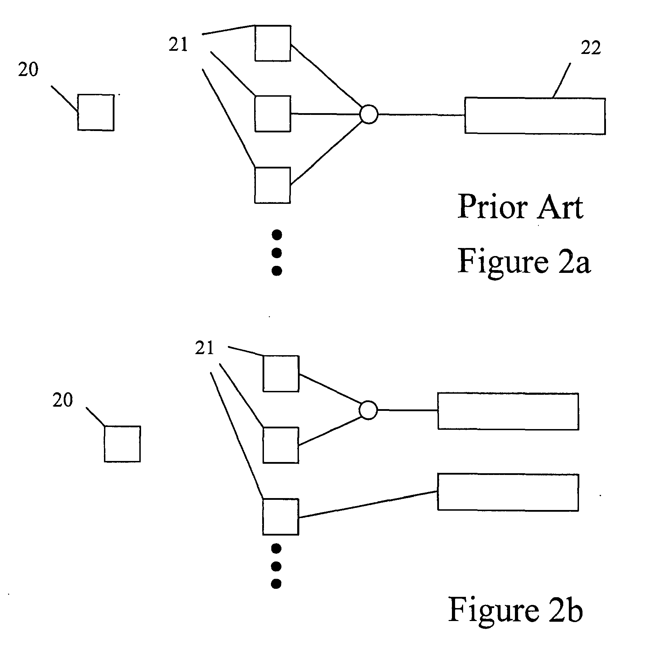

A prior art receive diversity antenna arrangement is illustrated in Figure 2a. One transmit antenna 20 transmits to three or more receive antennas 21 which are arranged to have diversity with respect to one another. A single receive chain 22 is provided and switched antenna selection is used to produce one channel input to the receive chain 22. In this non-MIMO arrangement more receive antennas than receive chains are used and because the receive antennas are diverse the effects of multipath fading are reduced as explained above.

An embodiment of the present invention is illustrated in Figure 2b. This is a non-MIMO arrangement using receive antenna diversity in a similar manner to that of Figure 2a. One transmit antenna 20 transmits to three or more receive antennas 21. However, two receive chains 22 are provided. It is also possible to use more than two receive chains 22 as long as there are always more receive antennas than there are receive chains. A subset of the outputs of the receive antennas are selected to be consistent with the number of receive chains. Various advantages are obtained as compared with the prior art situation in Figure 2a. For example, the receive gain is increased because there are more receive chains. Also, the ability to deal with the effects of multipath fading is improved. For example, consider the prior art situation in which one receive antenna is selected from three receive antennas. The ability to cope well with multipath fading depends on whether the signal received at that chosen antenna is subject to fading. However, in the embodiment illustrated in Figure 2b, two receive antennas are effectively selected from three possible receive antennas. Because two antennas are selected rather than one the ability to deal with multipath fading is improved as discussed in more detail below.

Although Figures 2a and 2b are concerned with receive diversity, similar situations occur for transmit diversity.

As mentioned above the present invention is applicable to MIMO communications systems as well as to non-MIMO arrangements such as those illustrated in Figure 2b. As mentioned above with respect to Figure 1 MIMO systems use a plurality of antennas at both transmit and receive, together with a space-time coding system. A plurality of orthogonal MIMO channels occur (as a result of scattering) and capacity increases are achieved as a result (compared with non-MIMO multibeam antenna arrangements for example). Thus the system of Figure 2b has an additional advantage over the system of Figure 2a because Figure 2b can be used in a MIMO system whereas that of 2a cannot.

Previously, MIMO arrangements have used the same number of antennas : as MIMO channels and thus the same number of receive chains as receive antennas (or transmit chains as transmit antennas). The present invention recognises that advantages are obtained by using fewer receive chains than receive antennas as illustrated in Figure 2b with a MIMO system (or fewer transmit chains than transmit antennas).

We have shown that by using more receive antennas than receive chains in a MIMO system, capacity increases are obtained as compared with reducing the number of antennas to match the number of receive chains. This is the case both for nomadic user terminals which are moved from place to place, but are generally static when in use and also for mobile terminals which are moveable during use. The situation involving nomadic user terminals is now discussed.

Nomadic user terminals

Nomadic user terminals are typically located indoors in environments where scattering occurs. Spatial fading of the multipath in the indoor environment has an envelope that is Rayleigh distributed, and this results in a MIMO link capacity which is dependent on the spatial location of the nomadic terminal. For a given area of constant local mean one obtains a capacity distribution for the MIMO link when that terminal is moved through spatial fading. Thus it is possible for any given user terminal to be placed in a "bad" location where the capacity is at the bottom end of the capacity distribution.

The theoretical Shannon capacity for a MIMO link is dependent on the spatially averaged carrier to interference levels and on the instantaneous received voltages on each MIMO path (when the mean power on each path has been normalised to unity). A capacity distribution then arises, because of the spatial fading of the MIMO paths. For a static terminal there is still some fading on the paths which is caused by the movement of objects in the environment. As a result the temporal fading tends to be Ricean with a high K-factor. Consequently, if a user terminal is placed in a 'bad' spot it tends to remain bad for the duration of the link. This is particularly bad if the delay spread is low such that there is only one resolvable tap in the time domain (no time diversity in CDMA systems), and a flat channel in the frequency domain (no frequency diversity in OFDM systems). This is likely to be the case, for example, in residential suburban environments (e.g. small office, home office SOHO applications).

In order to circumvent this problem we have equipped the user terminal with more antennas than it has receive chains. We show that a type of eigenvalue selection diversity can be employed which improves the lower end of the MIMO Shannon capacity distribution by about 20%. This in turn increases the overall throughput. The method is now described.

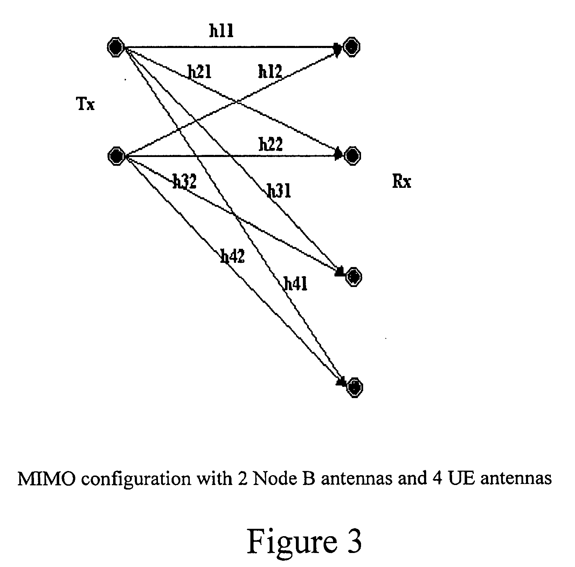

In a preferred embodiment a MIMO configuration is provided whereby there are two antennas at the basestation (also referred to as Node B), four antennas at the user terminal (also referred to as user equipment, UE), but only two receive chains at the UE. The situation is illustrated in Figure 3, which shows two transmit antennas 30, four receive antennas 31 and connections h11, h12, h21, h22, h31, h32, h41, h42 between those entities.

In the embodiment shown in Figure 3, the actual MIMO configuration is 2:2 because there are only 2 receive chains at the UE. However there are six possible 2:2 MIMO matrices that the UE can choose from. These are as follows:-

$$\mathbf{H}_{UE1,UE2} = \begin{bmatrix} h_{11} & h_{21} \\ h_{12} & h_{22} \end{bmatrix}$$

$$\mathbf{H}_{UE1,UE3} = \begin{bmatrix} h_{11} & h_{31} \\ h_{12} & h_{32} \end{bmatrix}$$

$$\mathbf{H}_{UE1,UE4} = \begin{bmatrix} h_{11} & h_{41} \\ h_{12} & h_{42} \end{bmatrix}$$

$$\mathbf{H}_{UE2,UE3} = \begin{bmatrix} h_{21} & h_{31} \\ h_{22} & h_{32} \end{bmatrix}$$

$$\mathbf{H}_{UE2,UE4} = \begin{bmatrix} h_{21} & h_{41} \\ h_{22} & h_{42} \end{bmatrix}$$

$$\mathbf{H}_{UE3,UE4} = \begin{bmatrix} h_{31} & h_{41} \\ h_{32} & h_{42} \end{bmatrix}$$

As an example, each of the MIMO paths can be represented as a random Gaussian process, having a mean power of unity. The paths are independent (uncorrelated) and power imbalance between the paths is not considered. Each path is represented by the following equation:-

$$h_{mn} = N\left(0, \frac{1}{\sqrt{2}}\right) + jN\left(0, \frac{1}{\sqrt{2}}\right) \quad (1)$$

where $N\left(0, \frac{1}{\sqrt{2}}\right)$ is a random number having a normal distribution with a mean of zero and a standard deviation of $\frac{1}{\sqrt{2}}$. Thus, each matrix element consists of a complex voltage where the I and Q components are normally distributed. These result in an envelope which is Rayleigh distributed with a mean power of $2\sigma^2 = 1$.

Using this expression for each MIMO path (with different samples of the random variable) the six instantaneous 2:2 channel matrices can be constructed. Then, for each instance the eigenvalues of the channel product matrix can be determined, where the channel product matrix is given by the following:-

$$\mathbf{H}_{UEm,UEn}\mathbf{H}^{\mathbf{H}}_{UEm,UEn} \simeq \begin{bmatrix} h_{m1} & h_{n1} \\ h_{m2} & h_{n2} \end{bmatrix} \cdot \begin{bmatrix} h^{*}_{m1} & h^{*}_{m2} \\ h^{*}_{n1} & h^{*}_{n2} \end{bmatrix} \quad (2)$$

The eigenvalues of this matrix represent the power gains of the eigenmodes, of which there will be two.

The upper Shannon bound on capacity for a 2:2 MIMO configuration with independent Rayleigh fading channels can be determined using the following formula :-

$$C = \sum_{i=1}^{N} log_2\left(1 + \frac{\lambda_i}{N}\rho\right) \quad (2)$$

where,

$N =$ Number of transmit antennas
$\lambda_i =$ ith eigenvalue
$\rho =$ Signal to noise ratio

The capacity is the sum of the Shannon capacities of N orthogonal channels, where the power gains of the channels are given by the eigenvalues of the channel product matrix. In this sum the available transmit power is equally distributed between the two channels.

In order to implement an eigenvalue selection diversity scheme a metric is required to enable selection between the six possible UE antenna combinations. Two different metrics are considered:-

- Sum of eigenvalues;

- Shannon capacity.

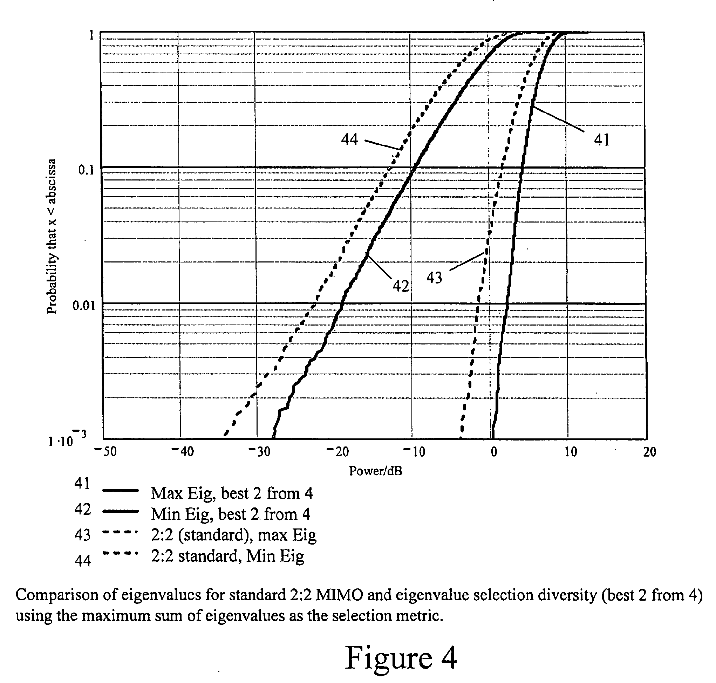

In the first instance, the sum of the eigenvalues for each UE antenna pair was calculated and the combination with the maximum sum was selected. This was done for ten thousand instances of the random variables. The 2:2 matrix for UE elements *UE1* and *UE2* was taken to be a reference matrix, and the Shannon capacity distribution was calculated for this case. This represents the standard 2:2 MIMO capacity distribution. The capacity distribution was also calculated for the case where eigenvalue selection diversity was implemented for each instance of the random variables, using the maximum 'sum of eigenvalues' as the selection metric. The eigenvalue distributions for the reference and diversity cases are shown in Figure 4. This shows a clear increase in the eigenvalue distributions when eigenvalue diversity is employed.

In the case that the selection metric is the maximum instantaneous link capacity we investigated the capacity distributions. The eigenvalue selection diversity has improved the lower end of the capacity distribution, although in this case the improvement is greater than for the case where the maximum sum of eigenvalues is used as the selection metric. The capacity distributions for the two forms of eigenvalue selection diversity were compared. The difference between the two schemes is only significant at high SNR's.

For the 'sum of eigenvalues' scheme the six 2:2 channel matrices are estimated and the eigenvalues computed. This is preferably done on an average basis to average out any effects of temporal fading. For the maximum capacity scheme the eigenvalues are estimated as well as the signal to noise ratio (SNR) or carrier to interference level (C/1). Estimates of the instantaneous capacity are then made for the six possible channel matrices. Some averaging is used to eliminate any effects of temporal fading.

We also compared the capacity distribution for a standard 2:4 MIMO configuration to the capacity distribution for the 'maximum capacity' eigenvalue selection diversity scheme. The 2:4 MIMO system achieves a higher capacity, but this would require four receive chains at the UE rather than two. The 'maximum capacity' eigenvalue selection diversity curves were also compared to the capacity curves for 2:2 and 2:4 MIMO configurations. It was found that the eigenvalue selection diversity scheme achieved a significant part of the extra capacity gain that could be obtained from a 2:4 MIMO system with four receive chains.

In the examples described immediately above with respect to nomadic terminals, two selection metrics were considered, one being the sum of the eigenvalues and the other being the instantaneous link capacity. It is not essential to use these particular selection metrics and as discussed below other types of metric can be used. In addition, the results described above with respect to nomadic terminals also apply to mobile terminal situations at least to some extent.

Switching mechanism

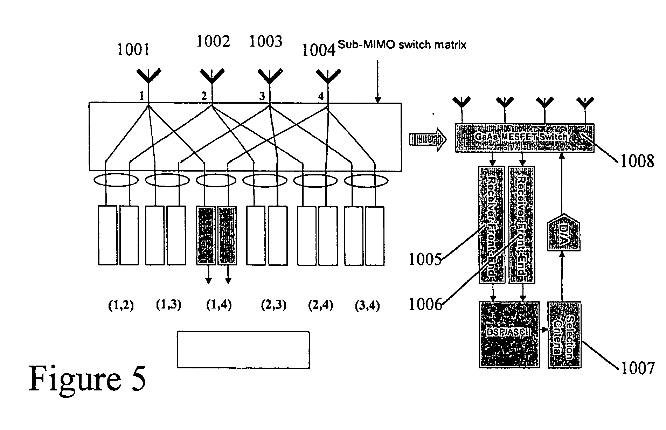

Consider an example of a MIMO switching receiver architecture as illustrated in Figure 5. Four receive antennas 1001 to 1004 are shown with only two receive chains 1005, 1006, (also referred to as receiver front-ends). There are six possible selections of two antennas from the four available. For a given time instant the receiver can only monitor and measure the reception condition of two antennas. Thus we establish intelligent switching criteria to allow selection of the best pair of antennas. In order to minimise implementation costs the processing required 1007 to select two antennas is implemented in the base-band processing region of the receiver processing. However, this is not essential. Also, the mechanism for switching between the antennas 1008 is implemented directly at antenna output. For example, using a GaAs MESFET highspeed switch, integrated into a Low Noise Amplifier (LNA) with a 3-bit switch command generated from a base-band modem. The average insertion loss for such a GaAs MESFET switch is low (e.g. around 0.1 dB) and the cost is also low.

Mobile terminals - high speed mobility

We have also found that MIMO configurations in which there are fewer receive chains than receive antennas can advantageously be used for high speed mobility applications where the user terminal is moving at speeds of up to about 100 km/hour. In one such embodiment using two transmit antennas, and selecting two from four receive antennas for use with two receive chains, we found a 3 dB gain as compared with standard 2:2 MIMO.

Selection metrics

Two selection metrics were mentioned above, one being related to the link capacity and the other being the sum of the eigenvalues. Other selection metrics or methods can be used and some examples are given below:

- Receive signal strength indicator (RSSI) (i.e. choose the selection which gives the highest RSSI)

- Decoder output bit error rate (BER) (i.e. choose the selection which gives the lowest BER)

- Round-robin strategy (i.e. try each possible selection in turn and choose the best)

- Shannon capacity (i.e. choose the selection which gives the highest Shannon capacity or highest instantaneous link capacity)

- Eigenvalues (i.e. choose the selection which gives the highest sum of the eigenvalues)

- CRC triggered switch (i.e. following the FEC decoding, if CRC detection is erroneous then one or both receivers switch to another antenna/antennas according to a pre-determined rule or by searching for the best antenna selection.

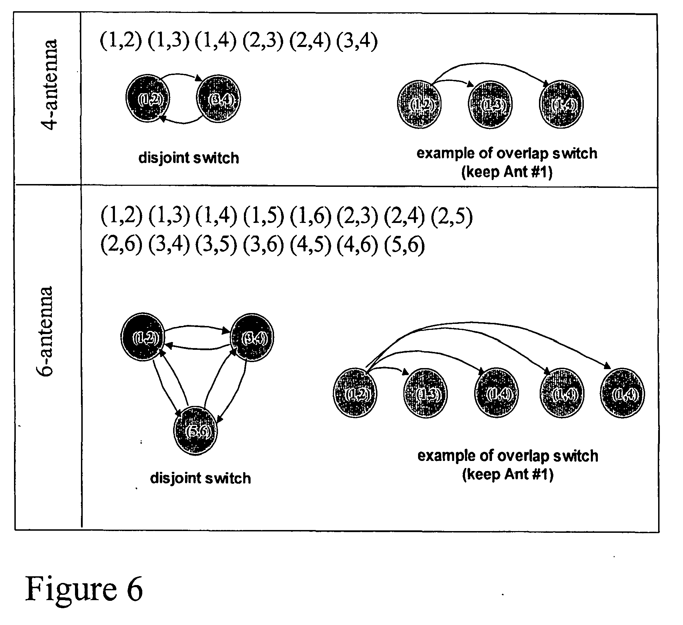

Consider the situation in which the number of receive chains L is less than the number of receiving antennas M. In that case there are a total of K=M!/L!(M-L)! possible switching configurations where the symbol ! indicates "factorial". It is beneficial to perform a full search of all possible switching configurations at the expense of high computational complexity. However, this is not essential as explained below. In Figure 6 we illustrate possible switching configurations for two situations namely, (4 antennas, 2 receive chains) and (6 antennas, 2 receive chains). Once a given set of antennas are selected, it is preferable that the next set of selected antennas does not contain a single identical antenna to the first set. We refer to such sets as being disjoint. For example, in the case of 4-antenna and 2-receive, if the current selection is (1,2) the possible selections to switch to are (1,3), (1,4), (2,3), (2,4) and (3,4). However, we have found that the best switch strategy is to select disjoint set (3,4). In the case of 6-antenna, 2-receive, for each starting selection we have six disjoint selections to switch to. In Figure 6, we only show the switch transition for (1,2) (1,3) (1,4) (1,5) (1,6), however, among the disjoint switch strategies we show the simplest switch rule: (1,2) ↔ (3,4) ↔ (5,6).

The best switch rules depicted in Figure 6: (1,2) ↔ (3,4) and (1,2) ↔ (3,4) ↔ (5,6) have another significance in terms of antenna configuration because they are well suited for polarised receive antenna arrangements.

Alternatively, in the case of two receive-chains, we could keep one of the currently selected antennas (the one with the better channel quality) and switch the other currently selected antenna. In Figure 6, for the 4 antenna case with the configuration (1, 2), where antenna 1 is kept, the possible switch transitions are then (1, 3) and (1, 4). For the 6 antenna case with the configuration (1, 2), where antenna 1 is kept, the possible switch transitions are then (1, 3), (1, 4), (1, 5) and (1, 6). We refer to such sets as being overlapping. That is overlapping sets contain at least one common antenna.

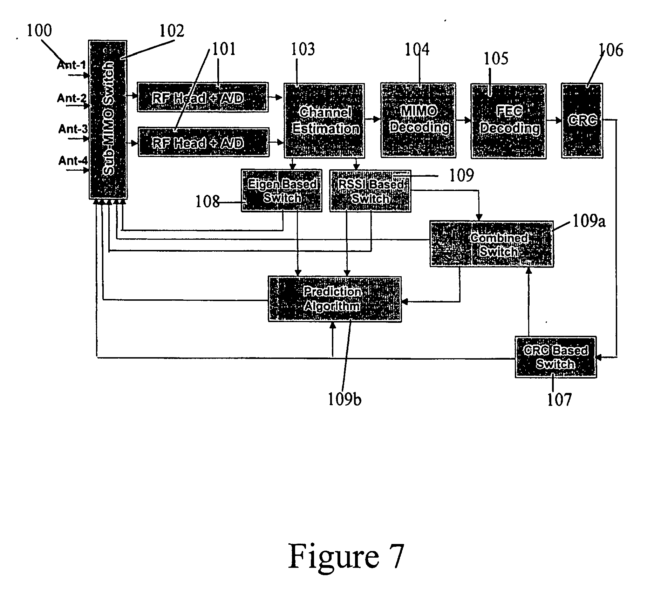

Figure 7 is a schematic diagram of the processing that occurs in a MIMO system once the MIMO channels are received. It also shows how some of the selection metrics mentioned above can be used to effect switching between the antennas. In the particular example illustrated in Figure 7 there are four receive antennas 100 and two receive chains 101. A switching mechanism 102 is used to switch between the antennas. The receive chains 101 provide output to a channel estimator 103 as known in the art. This estimates the MIMO channels and provides output to a MIMO decoder 104 which decodes the space-time coded signals. The decoded signals are then processed by a forward error correction (FEC) decoder and finally by a cyclic redundancy check unit (CRC) 106. As illustrated in Figure 7 the results 107 of the CRC unit 106 can be provided as input to the switch mechanism 102 via a CRC based switch 107. Alternatively the results from the channel estimator 103 can be provided to the switch mechanism via an eigenvalue based switch 108 or an RSSI based switch 109 as shown.

The switching criteria comprising RSSI, Shannon Capacity and eigenvalues (as mentioned above) can be implemented at base-band signal processing at the MIMO channel estimation output 103 (see Figure 7). The CRC based metric is implemented at the FEC decoder output as shown. Prediction algorithms 109b may be used in conjunction with the RSSI, Shannon Capacity and Eigenvalue based criteria in order to select the best antennas in the absence of measurements of all possible antenna combinations. For example, information about past performance of those antenna selections may be used to make predictions.

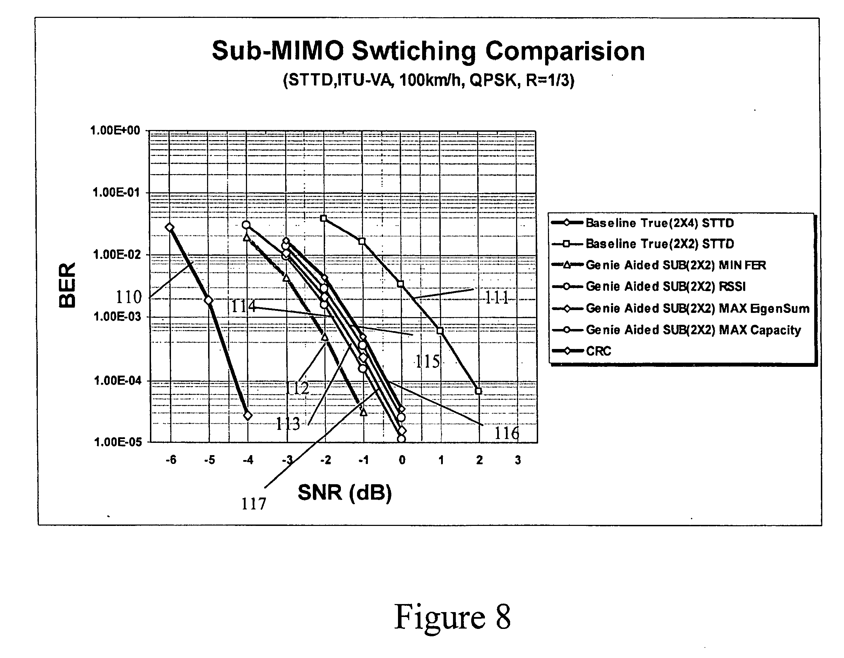

Using a simulation we have compared the performance of the various selection methods and metrics mentioned above and the results are shown in Figure 8 which is a graph of bit error rate (BER) against signal to noise ratio (SNR). Our simulation was made using OFDM waveform as physical layer signalling for the situation involving four receive antennas and two receive chains at a user equipment moving at a speed of 100 km/h.

The best performance was found when using the minimum BER as the selection metric (see line 112 in Figure 8). However, this metric is relatively complex to compute. The next best performance was found when using the RSSI criterion calculated assuming perfect apriori MIMO channel knowledge or perfect channel prediction (see line 113). We use the term "genie aided" to refer to the fact that perfect apriori MIMO channel knowledge or perfect channel prediction is assumed. The next best performance was found for the genie aided maximum of eigen value summation (see line 114). The next best performance was found for the genie aided maximum of channel capacity (see line 115) which is relatively complex to compute compared with say the summation of eigen value. The next best performance was found for the CRC triggered switch without the MIMO channel knowledge (see line 116). This method has the advantage of being relatively simple to compute because MIMO systems typically monitor CRC anyway. Thus to implement a switched selection method using CRC based metrics is relatively straightforward. Also, the performance of the genie aided metrics was found to be close to the CRC triggered blind switch.

Thus in a preferred embodiment of the present invention the selection metric is related to CRC. Also we have found that by using CRC based metrics the number of times at which switching is deemed to be required is far fewer than when using the eigenvalue based metrics. Thus when eigenvalue based metrics are used additional criteria such as some type of threshold mechanism may be required to prevent too frequent switching between antennas.

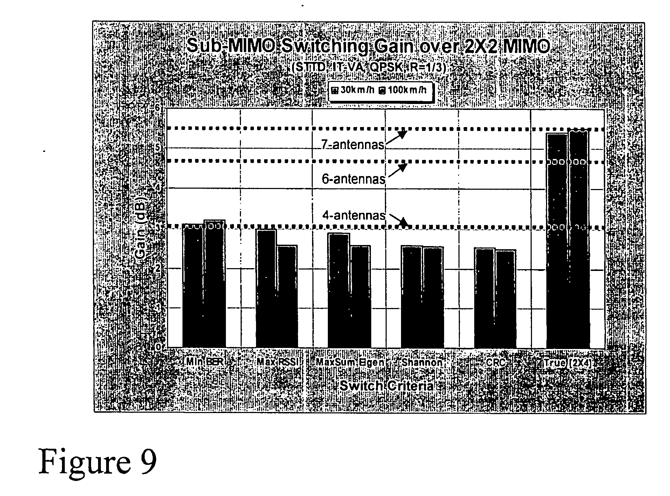

Results of our further simulations are shown in Figure 9. Again a 2x4 MIMO is simulated where the user equipment is configured with 4 receive antennas and 2 receive chains. Six possible selections of two antennas are possible and denoted as $H_{i,j} = \begin{bmatrix} h_{i,1} & h_{j,1} \\ h_{i,2} & h_{j,2} \end{bmatrix}$ where $i, j$ = 1,2,3,4. In order to obtain the upper bound of the selection performance, we simulated the situation using three selection criteria (RSSI, Shannon Capacity, and Eigenvalues) using genie aided calculations; that is assuming perfect apriori channel knowledge or perfection channel prediction. All six possible selections could be selected. The CRC based criterion was simulated with real world receiver operation. The switch criteria used in the simulations are described below in more detail where $\lambda_1$, $\lambda_2$ are the eigen values of matrix $H_{i,j}$.

| Criteria | Computing Rule | Comment |
|---|---|---|
| | Select sub-MIMO with minimum FEC decoding bit errors | Perfect Prediction |
| | $$\max_{i,j \in (,1,2,3,4)} \left\{ h_{i,1}^2 + h_{i,2}^2 + h_{j,1}^2 + h_{j,2}^2 \right\}$$ | Perfect Prediction |
| Max_Eign | $$\max_{i,j \in (,1,2,3,4)} \left\{ \lambda_1 + \lambda_2 \right\}$$ | Perfect Prediction |
| Max_ Capacity | $$\max_{i,j \in (,1,2,3,4)} \left\{ \left( \log(1 + \frac{\lambda_1 \rho}{2}) \right)_{i,j} + \left( \log(1 + \frac{\lambda_2 \rho}{2}) \right)_{i,j} \right\}$$ | Perfect Prediction |
| CRC | If CRC detects encoder block error, then switch to the sub-MIMO under the rule (1,2) $\leftrightarrow$ (3,4) | Blind Switch |

Figure 9 shows the simulation results comprising the gain for the 4-antenna and 2-receive chain selection arrangement compared to a true 2x2 MIMO and 2x4 MIMO. In addition the theoretical gain (upper bound) for 4, 6 and 7 antennas are also plotted, the mathematical derivation is shown in equation 50 in Appendix-A. As we can see clearly, the selection methods all provide significant gain over static 2x2 MIMO with the same receiver-front-end hardware complexity. In particular, the CRC based selection method can achieve a gain close to the genie aided switch criteria.

Although the selection metrics discussed above have been described with reference to selection from receive antennas these metrics can also be used for selection between transmit antennas by using any type of feedback mechanism from the receive apparatus to the transmit apparatus.

Use of directional antennas

When we consider situations involving a plurality of user terminals interference can occur as a result of signals from one terminal reaching another terminal and interfering with signals from a basestation to that terminal. By using directional antennas at the user terminals, for example, as previously implemented in fixed wireless access arrangements, it is possible to reduce such interference as compared with a reference situation using omnidirectional antennas at the user terminals. However we have found that by using directional antennas at the user terminal in a MIMO system, and in addition, using switched antenna selection at the user terminal, significant advantages are found. Even though switched selection effectively reduces the number of antenna elements which would be expected to reduce the resulting MIMO performance, we have found that benefits can be achieved.

This is explained in more detail below with respect to several embodiments concerning a MIMO antenna arrangement in a stand-alone unit for use with a user terminal such as a personal computer. In these embodiments an antenna arrangement for a user terminal is provided such that the user terminal can use a high data rate MIMO wireless link. Preferably the MIMO link comprises four orthogonal channels with similar signal levels in order to facilitate increase in capacity as a result of the use of MIMO communications.

The antenna arrangement is supported in a box, cube, or other stand alone structure which can be connected to a personal computer, laptop computer, personal digital assistant, or any other type of user terminal. This provides the advantage that the antenna arrangement is easily placed on a desk, table or other surface and can be used in conjunction with any suitable type of user terminal rather than being permanently integrated into one user terminal. The size of the antenna arrangement is minimised in order that the stand alone unit is compact and portable.

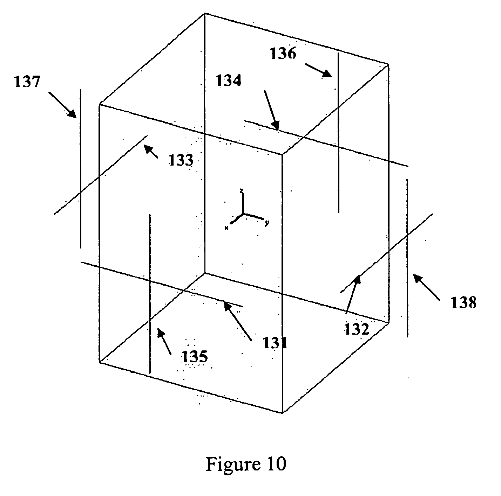

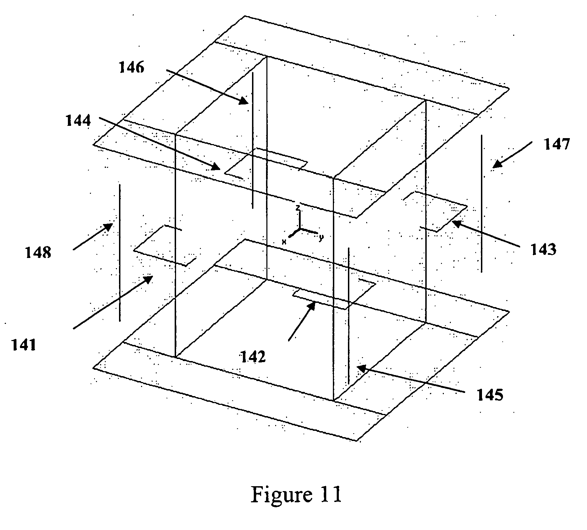

Figures 10 and 11 illustrate two possible antenna arrangements each supported by a stand alone unit 128 of dimensions 9cm x 9cm x 13cm or any other suitable size which can be hand held. Figure 10 shows an arrangement using eight dipoles 131-138 one horizontal and one vertical dipole being supported from each of four faces of the unit. The antennas stand away from the surface of the unit to which they are connected by feed and ground pins. The four faces are chosen such that when the unit is stood on one face, the opposite face (top) has no dipoles. The vertical dipoles are supported 2.5cm from the unit and the horizontal dipoles 3.5cm from the unit. We found that the signal level achieved using dipoles was higher (improved) than that found using planar inverted F antennas (PIFAs). In addition, azimuth directivity was more significant for the dipole arrangement.

Figure 11 shows another embodiment in which four vertical 145-148 and four horizontal dipoles 141-144 are again used. In this case the dipoles are supported at corners of the unit in order to broaden the azimuth pattern as compared with the arrangement of Figure 10. The ends of the horizontal dipoles are curled or bent in towards the unit to minimise any fall in azimuth pattern which may occur at the end of the dipoles. As before the dipoles are supported or spaced away from the surface of the unit. In this embodiment a conductive plate 140, is placed on one face of the unit (top face) such that it covers that face and extends beyond each edge of that face. Another conductive plate 141 is placed covering the opposite face of the unit (bottom face). These plates are added to improve the front to back ratio of the horizontal dipoles. The plates extend beyond the unit as explained above and illustrated in Figure 11 in order to match the front-to-back ratio of the horizontal dipole with that of the vertical dipole. In one particular example the plates extended beyond the unit by 3cm with the dimensions of the unit then being 15cm x 15cm x 13cm.

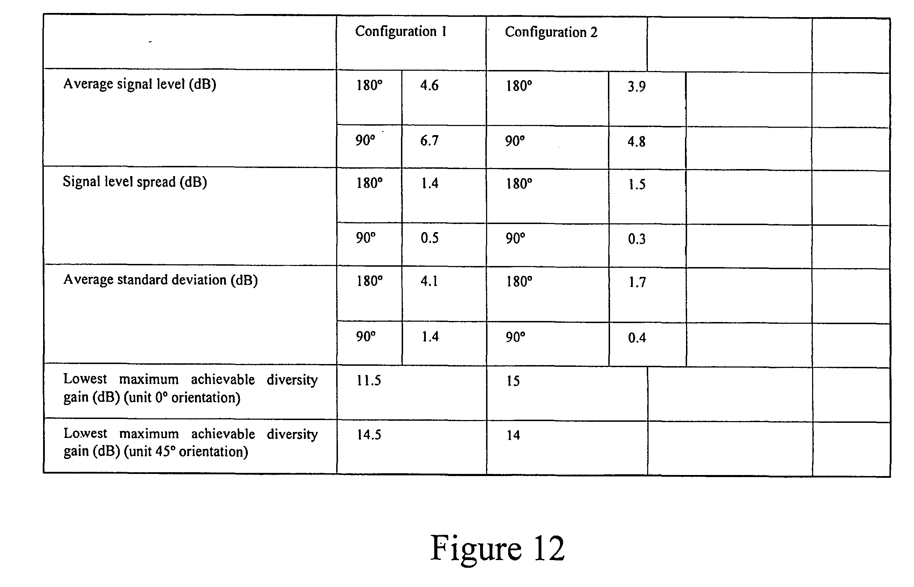

We compared the performance of the embodiments illustrated in Figures 10 and 11 and the results are given in Figure 12. The embodiment of Figure 10 is referred to as configuration 1. In this case the dipoles are placed over faces of the unit and are more directional than that in the arrangements of Figure 11 (configuration 2). The results indicate that each arrangement provides a fully workable system.

Figure 12 shows the metrics used for comparison of the stand alone configurations. Configurations 1 and 2 have metrics averaged over 90˚ and 180˚. These configurations have directional antennas, the two averages consider 2:2 (assumed for uplink) and 2:4 MIMO (assumed for downlink). The diversity gain is given for two unit orientations, 0˚ and 45˚. This is of interest as the stand alone unit could be placed on a surface in any orientation.

We found that configuration 1 (Figure 10) was advantageous in that it provided the highest average gain. This eases the burden with, for example, power amplifiers, which in turn reduces cost.

In the examples described above with reference to Figures 10 and 11 it is assumed that the stand alone unit operates as part of a 2:2 MIMO configuration on the uplink and a 2:4 MIMO configuration on the downlink. That is on the uplink two antennas are selected (from the eight available) to transmit to two inputs at a basestation. On the downlink, four antennas at the user terminal are selected (from the eight available) to receive signals from two outputs at the basestation. However, this is not essential, any n:m MIMO configurations can be used for either the uplink or downlink where n and m are integers greater than 1.

Using a computer simulation we found that for the arrangement of Figure 10 a 2dB improvement in carrier to interference is obtained when using a "switching" mechanism to select the best combination of 4 antenna elements from the 8 available as opposed to using any combination of 4 of the 8 antennas.

Our simulation assumed that each nomadic user terminal (as in Figure 10) was located in an indoor environment in a dense urban area that included other such high data rate users. A situation involving a network of 19 basestations each with 3 sectors, and 1000 subscribers served by each basestation at random locations in the network.

We also found a 3dB improvement in carrier to interference when the best combination of 2 antenna elements are selected from the 8 available as opposed to using any combination of 2 of the 8 antennas.

Thus we have found that by using switched selection between directional antennas at the user terminal in a MIMO arrangement improvements in carrier to interference levels are found and in addition situations involving spatial fading can more effectively be dealt with.

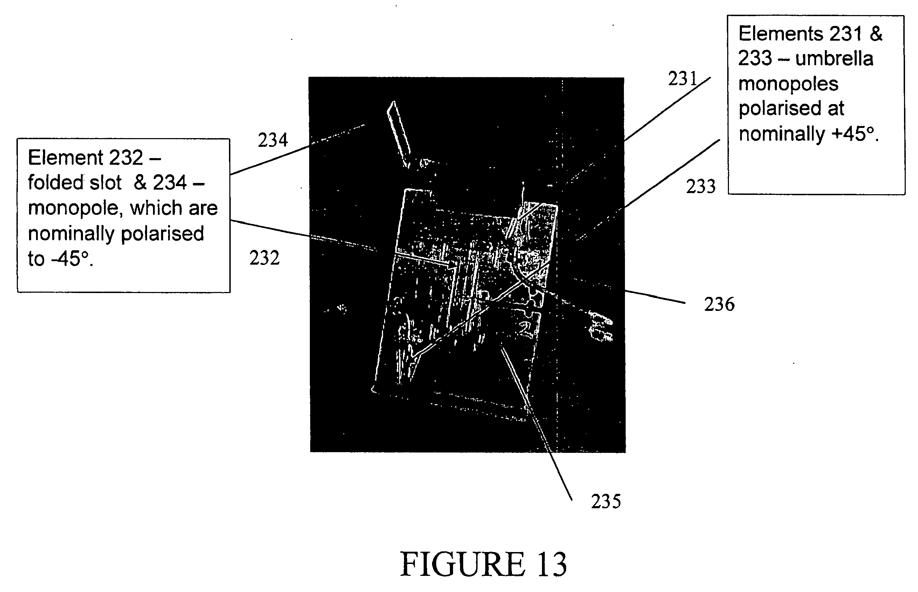

Switched selection between directional antennas at a MIMO user equipment is also particularly advantageous for small user equipment. In such cases the structure of the user equipment itself often blocks antenna patterns in particular directions for antennas mounted on the user equipment. A nominally omnidirectional azimuth pattern is then difficult to realise. For example, in a particular embodiment we provide 4 antennas for MIMO communications in a personal digital assistant (PDA). Figure 13 illustrates the antenna arrangement. Of the four antennas 231-234, three 231-233 are arranged to be integrated into a support structure such as a flap. Preferably the flap is moveably connected to the PDA such that it covers a display screen face of the PDA when not in use. The flap can be arranged to fold around the side or over the top of the PDA. Preferably the flap is folded out in use such that the angle between the flap and the PDA is about 90˚. However, this is not essential, any suitable angle between the flap and the PDA can be used such that polarisation diversity is provided. A ground plane 235 is integrated into the flap and is co-planar with the three antennas 231-233 in the flap. A second ground plane 236 is incorporated into the PDA itself (for example, this may be provided by circuit boards already present in the PDA body which provide the PDA functionality). An antenna 234 associated with this second ground plane is preferably mounted on the PDA so that it protrudes as shown in Figure 13.

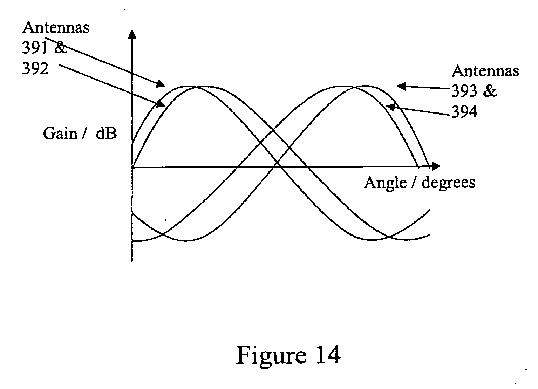

Antennas 231 and 234 are preferably co-planar umbrella monopoles. Antenna 232 is preferably provided in the form of a slot mounted in the flap whilst antenna 234 is preferably a monopole mounted on the PDA body. We found that the profile of the PDA limited the amount of omnidirectionality of the antenna patterns because of blocking. This is addressed by using complementary directive patterns designed with the body of the PDA in mind. In a preferred example the four antennas are arranged to provide the directional antenna patterns of Figure 14. Considering the traces in Figure 14, it is seen that at any angle, two antenna patterns provide good signal strength. For example, complementary patterns 391 and 392 could initially be selected (in a 2:2 MIMO system with 2 from 4 switched antenna selection at the PDA). If the signal strength is found to be poor the other patterns 393 and 394 are selected. Alternatively, both options can be tested and the best pair of antennas chosen. The selection process is repeated over time to take into account changes in terminal position or in the environment.

In order to achieve the complementary directional patterns as described above any suitable method is used as known in the art.

It is noted that pointing losses are typically experienced by antenna switching systems. Such pointing losses limit the improvement in carrier to interference levels found for directional antenna systems with switched selection. One way to overcome this is to use steered beam systems, either with mechanical beam steering or adaptive combination techniques.

In the examples described above antenna selection is used to enable the number of transmit or receive claims to be reduced. A related advantage is achieved by using adaptive combination techniques which involve combining the effects of a plurality of antenna elements to produce directional antenna beams. An example is described in our earlier US Patent Application number 09/975,653, publication number US 6 870 515, which is also assigned to Nortel Networks. In that document we describe a basestation antenna array with six columns of dual polarised antenna elements. The six columns have a spacing of half a wavelength in azimuth. Two fixed multiple beamformers, which do not allow beam steering, are used in conjunction with this array to form three directional antenna beams at each of the two polarisations. This basestation antenna array functions over a limited sector and as such is not suitable for user terminals which are nomadic or mobile and which may be placed in any orientation with respect to a basestation in use.

According to another aspect of the present invention we use an adaptive combination technique, in combination with a MIMO antenna arrangement. By using an adaptive combination technique to create directional antenna beams, carrier to interference levels are improved and capacity thus increased. Advantageously, the adaptive combination method can be electronically controlled in order to change the direction of the antenna beams produced.

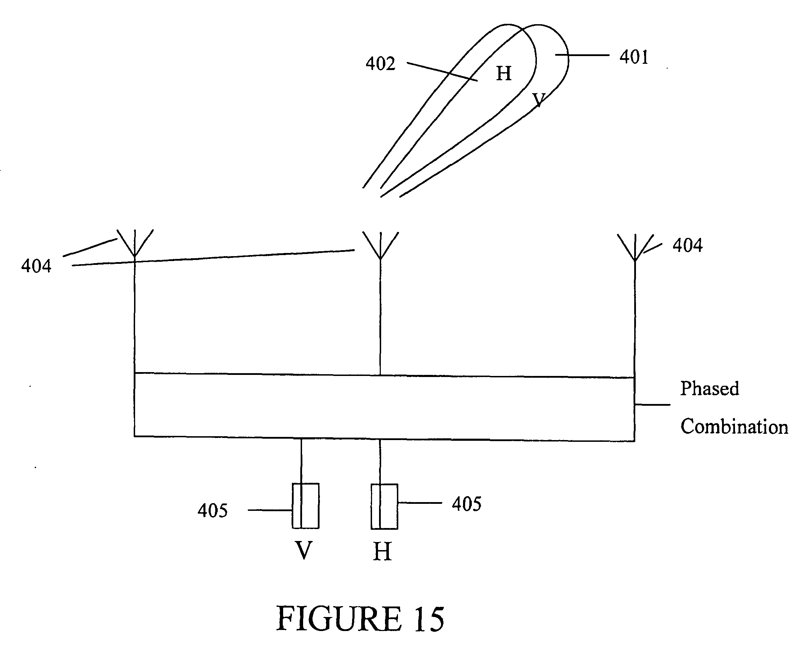

For example, in the embodiment of Figure 15 an array of three antenna elements 404 is provided. The antenna elements are substantially omnidirectional and are closely spaced (i.e. not spatially diverse) and have polarisation diversity. The antenna elements 404 are adaptively combined 403 to produce a pair of directional antenna beams 401, 402 having substantially the same direction and antenna pattern but being of substantially orthogonal polarisations. Two receive chains 405 are provided. This arrangement is advantageously provided at a user terminal for example, for use in an n:2 MIMO system where n is an integer of value 2 or above. Any suitable number and arrangement of antenna elements can be used to provide two or more directional antenna beams using adaptive combination.

In order that a MIMO system can be provided the antenna beams are arranged to be diverse. For example, in the embodiment of Figure 15, the antenna beams 401, 402 are polarisation diverse. However, they could alternatively be spatially diverse or have angular diversity.

Any suitable type of adaptive combination may be used. For example, using beamformers or by using phased combination.

Any range or device value given herein may be extended or altered without losing the effect sought, as will be apparent to the skilled person for an understanding of the teachings herein.

Appendix A

Suppose that all receive antennas are independent, then by picking any two receive antennas, the multi-path components of these two channels are uncorrelated, which means for a stationary process, the frequency diversity gain is unchanged comparing to the fixed antenna case. This appendix analyses antenna switching by exploiting temporal up fades. Note that this is the minimal we can achieve, as antenna switching based on both temporal up fades and frequency diversity is not concerned in this appendix. However, note that the most significant contributing factor in our system is temporal fading rather than frequency selective fading. The reason is that we can effectively mitigate the effects of frequency selective fading with a channel interleaver, but we can only effectively mitigate temporal fading with space diversity (e.g., antenna switching). This is especially true when Doppler is low, e.g., with a vehicle moving at a speed of 30 kmph.

Let $P_1 > P_2 > P_3 > P_4$ be the received powers from four receive antennas, then, with antenna switching, the average power from the two active antennas is:

$$P_{AS} = E(P_1 + P_2) \qquad (10)$$

With fixed antenna, the average power received by two antennas is:

$$P_{Fix} = E\left(2 \times \frac{P_1 + P_2 + P_3 + P_4}{4}\right) = E\left(\frac{P_1 + P_2 + P_3 + P_4}{2}\right) \qquad (20)$$

Therefore, the gain we can get from antenna switching is:

$$\frac{P_{AS}}{P_{Fix}} = E\left(2\frac{P_1 + P_2}{P_1 + P_2 + P_3 + P_4}\right) = 2E\left(\frac{1}{1 + \frac{P_3 + P_4}{P_1 + P_2}}\right) \qquad (30)$$

$$= 3dB - 10\log\left(1 + E\left(\frac{P_3 + P_4}{P_1 + P_2}\right)\right)dB$$

This means that the maximum gain we can get from antenna switching is 3 dB, and this happens when the signals received from the two weak antennas are negligible compared to the signals received from the two strong antennas. Note that when $P_1 = P_2 = P_3 = P_4$, the gain calculated from Equation (30) is 0 dB, which means no gain can be achieved by selecting antennas from equal strong antenna pools.

With Rayleigh fading, $E\left(\frac{P_3 + P_4}{P_1 + P_2}\right)$ can be fairly small. Suppose that $E\left(\frac{P_3 + P_4}{P_1 + P_2}\right) = \frac{1}{5}$, then the gain would be 2.2 dB.

The above results can be extended to $N > 4$ receive antennas. With $P_1 > P_2 > \cdots > P_N$, the gain obtained from antenna switching can be updated to

$$\frac{P_{AS}}{P_{Fix}} = E\left(\frac{N}{2}\frac{P_1 + P_2}{\sum\limits_{i=1}^{N} P_i}\right) = 10\log\left(\frac{N}{2}\right) - \log\left(1 + E\left(\frac{\sum\limits_{i=3}^{N} P_i}{P_1 + P_2}\right)\right)\text{dB} \quad (40)$$

which means the gain is bounded by

$$\frac{P_{AS}}{P_{Fix}} \to 10\log\left(\frac{N}{2}\right)\text{(dB)}. \quad (50)$$

If $N = 6$, then the up-bound for the gain is 4.77 dB. Notice that this bound is achieved with $E\left(\sum\limits_{i=3}^{N} P_i\right) = 0$.

With N increases, the up-bound 10log($N$/2) (dB) becomes looser and looser, as the condition of $E\left(\sum_{i=3}^{N} P_i\right) = 0$ is unlikely to be true.

$$\text{Let } P_{high} = \lim_{N\to\infty} E(P_1) = \lim_{N\to\infty} E(P_2), \text{ and } P_{ave} = \lim_{N\to\infty} E\left(\frac{\sum_{i=1}^{N} P_i}{N}\right), \text{ then}$$

$$\lim_{N\to\infty} \frac{P_{AS}}{P_{Fix}} = \lim_{N\to\infty} E\left(\frac{N}{2} \frac{P_1 + P_2}{\sum_{i=1}^{N} P_i}\right) = \frac{P_{high}}{P_{ave}} \tag{60}$$

Equation (0) indicates that when $N \to \infty$, the two selected antennas can always catch the up-fades, hence the gain from antenna switching equals to the peak-to-average ratio of the fade, which is channel dependent.

## Claims

1. A radio communications device comprising three or more diverse antennas (21; 100; 404; 1001, 1002, 1003, 1004) and a plurality of receive chains (22; 101; 405; 1005, 1006), there being fewer receive chains than antennas, said radio communications device further comprising a selector (102; 1008) which is arranged to select, for each of the plurality of receive chains, any one of the antennas for use in conjunction with that receive chain, the radio communications device being **characterised in that** it is arranged to provide multiple-input multiple-output communications using the plurality of receive chains.

2. A radio communications device as claimed in claim 1, wherein said antennas (21; 100; 404; 1001, 1002, 1003, 1004) each have directionality.

3. A radio communications device as claimed in claim 1 or 2, wherein the diversity of the antennas (21; 100; 404; 1001, 1002, 1003, 1004) is achieved via spatial diversity and/or polarisation diversity.

4. A radio communications device as claimed in any one of the preceding claims, wherein it comprises a base station or a user terminal.

5. A radio communications device as claimed in any one of the preceding claims, wherein said selector (102; 1008) comprises a switching mechanism arranged to switch the antennas (21; 100; 404; 1001, 1002, 1003, 1004) between the receive chains (22; 101; 405; 1005, 1006).

6. A radio communications device as claimed in claim 5, wherein said selector (102; 1008) is arranged to select antennas (21; 100; 404; 1001, 1002, 1003, 1004) on the basis of a parameter related to a cyclic redundancy check process.

7. A radio communications device as claimed in claim 6, wherein said selector (102; 1008) is further arranged to select for each receive chain (22; 101; 405; 1005, 1006) any one of the antennas (21; 100; 404; 1001, 1002, 1003, 1004) not currently selected for use in conjunction with any of the receive chains.

8. A radio communications device as claimed in any one of claims 1 to 5, wherein said selector (102; 1008) is arranged to select on the basis of a signal strength indicator.

9. A radio communications device as claimed in any one of claims 1 to 5, wherein said selector (102; 1008) is arranged to select antennas (21; 100; 404; 1001, 1002, 1003, 1004) on the basis of parameters related to any of a frame error rate, link capacity and eigenvalues of a channel product matrix.

10. A radio communications device as claimed in any one of the preceding claims, wherein each of said antennas (21; 100; 404; 1001, 1002, 1003, 1004) is arranged to provide a directional antenna beam and wherein at least some of those antenna beams are of substantially different pointing directions to one other of the antenna beams.

11. A radio communications device as claimed in any preceding claim comprising four pairs of antennas each pair of antennas being supported from a body which is sized and shaped such that it is portable and suitable to be supported on a substantially flat surface.

12. A radio communications device as claimed in claim 11, wherein said body is a parallelepiped and each pair of antennas is supported from a different face of said parallelepiped.

13. A radio communications device as claimed in claim 11 or claim 12, wherein said antennas are dipoles.

14. A radio communications device as claimed in claim 13, wherein one of each pair of dipoles is arranged such that its ends are directed towards the body.

15. A radio communications device as claimed in claim 13 or claim 14, wherein the selector (102; 1008) is arranged to select a first subset of the antennas for transmission and a second subset of the antennas for reception.

16. A radio communications device as claimed in claim 15, wherein the first subset comprises two of the antennas and the second subset comprises four of the antennas.

17. A radio communications network comprising at least one radio communications device as..claimed in any one of claims 1 to 16.

18. A radio communications network as claimed in claim 17, wherein it comprises a plurality of user terminals each being a radio communications device as claimed in any one of claims 1 to 16 and wherein each of said antennas at those user terminals is arranged to provide a directional antenna beam and wherein at least some of those antenna beams are of substantially different pointing directions than one other the antenna beams.

19. A method of operating a radio communications device comprising three or more diverse antennas (21; 100; 404; 1001, 1002, 1003; 1004), a plurality of receive chains (22; 101; 405; 1005, 1006) and a selector (102; 1008), wherein there are fewer receive chains than antennas, the method comprising selecting, for each receive chain, any one of the antennas for use in conjunction with that receive chain and the method being **characterised by** using outputs of the plurality of receive chains to provide multiple-input multiple-output communications.

20. A method as claimed in claim 19, wherein said step of selecting comprises selecting on the basis of a signal strength indicator.

21. A method as claimed in claim 19 or claim 20, wherein said step of selecting comprises selecting on the basis of parameters related to any of, a frame error rate, link capacity, cyclic redundancy check information and eigenvalues of a channel product matrix.

22. A computer program product comprising a computer readable medium carrying program code executable in a communications device for implementing the method of any one of claims 19 to 21.

**Patentansprüche**

1. Funkkommunikationsvorrichtung umfassend drei oder mehr Diversantennen (21; 100; 404; 1001, 1002, 1003, 1004) und eine Mehrzahl von Empfangsketten (22; 101; 405; 1005, 1006), wobei weniger Empfangsketten als Antennen vorliegen, wobei die Funkkommunikationsvorrichtung ferner einen Selektor (102; 1008) umfasst, der dazu angeordnet ist, für jede der Mehrzahl von Empfangsketten eine der Antennen zur Verwendung in Verbindung mit dieser Empfangskette auszuwählen, wobei die Funkkommunikationsvorrichtung **dadurch gekennzeichnet ist, dass** sie dazu angeordnet ist, Multiple-Input-Multiple-Output-Kommunikationen unter Verwendung der Mehrzahl von Empfangsketten vorzusehen.

2. Funkkommunikationsvorrichtung nach Anspruch 1, worin die Antennen (21; 100; 404; 1001, 1002, 1003, 1004) jeweils eine Richtcharakteristik aufweisen.

3. Funkkommunikationsvorrichtung nach Anspruch 1 oder 2, worin die Diversität der Antennen (21; 100; 404; 1001, 1002, 1003, 1004) durch räumliche Diversität und/oder Polarisationsdiversität erreicht wird.

4. Funkkommunikationsvorrichtung nach einem der voranstehenden Ansprüche, worin sie eine Basisstation oder ein Benutzerendgerät umfasst.

5. Funkkommunikationsvorrichtung nach einem der voranstehenden Ansprüche, worin der Selektor (102; 1008) eine Schaltvorrichtung umfasst, die dazu angeordnet ist, die Antennen (21; 100; 404; 1001, 1002, 1003, 1004) zwischen den Empfangsketten (22; 101; 405; 1005, 1006) zu schalten.

6. Funkkommunikationsvorrichtung nach Anspruch 5, worin der Selektor (102; 1008) dazu angeordnet ist, Antennen (21; 100; 404; 1001, 1002, 1003, 1004) auf der Grundlage eines Parameters, der auf ein Verfahren einer zyklischen Redundanzprüfung bezogen ist, auszuwählen.

7. Funkkommunikationsvorrichtung nach Anspruch 6, worin der Selektor (102; 1008) ferner dazu angeordnet ist, für jede Empfangskette (22; 101; 405; 1005, 1006) eine der Antennen (21; 100; 404; 1001, 1002, 1003, 1004) auszuwählen, die derzeit nicht zur Verwendung in Verbindung mit einer der Empfangsketten ausgewählt ist.

8. Funkkommunikationsvorrichtung nach einem der Ansprüche 1 bis 5, worin der Selektor (102; 1008) dazu angeordnet ist, auf der Grundlage eines Signalstärkeanzeigers auszuwählen.

9. Funkkommunikationsvorrichtung nach einem der Ansprüche 1 bis 5, worin der Selektor (102; 1008) dazu angeordnet ist, Antennen (21; 100; 404; 1001, 1002, 1003, 1004) auf der Grundlage von Parametern auszuwählen, die auf eines von einer Rahmenfehlerrate, einer Linkkapazität und Eigenwerten einer Kanalproduktmatrix bezogen sind.

10. Funkkommunikationsvorrichtung nach einem der voranstehenden Ansprüche, worin jede der Antennen (21; 100; 404; 1001, 1002, 1003, 1004) dazu angeordnet ist, einen richtungsbezogenen Antennenstrahl bereitzustellen und, worin wenigstens einige dieser Antennenstrahlen in im wesentlichen andere Richtungen als ein anderer der Antennenstrahlen zeigen.

11. Funkkommunikationsvorrichtung nach einem der voranstehenden Ansprüche, umfassend vier Paare von Antennen, wobei jedes Paar von Antennen von einem Körper getragen wird, der so bemessen und geformt ist, dass er tragbar und dazu geeignet ist, auf einer im wesentlichen flachen Oberfläche getragen zu werden.

12. Funkkommunikationsvorrichtung nach Anspruch 11, worin der Körper ein Parallelepiped ist und jedes Paar von Antennen von einer anderen Seite des Parallelepipeds getragen wird.

13. Funkkommunikationsvorrichtung nach Anspruch 11 oder Anspruch 12, worin die Antennen Dipole sind.

14. Funkkommunikationsvorrichtung nach Anspruch 13, worin eines von jedem Paar von Dipolen so angeordnet ist, dass seine Enden in Richtung des Körpers gerichtet sind.

15. Funkkommunikationsvorrichtung nach Anspruch 13 oder 14, worin der Selektor (102; 1008) dazu angeordnet ist, eine erste Untermenge der Antennen zum Senden und eine zweite Untermenge der Antennen zum Empfang auszuwählen.

16. Funkkommunikationsvorrichtung nach Anspruch 15, worin die erste Untermenge zwei der Antennen umfasst, und die zweite Untermenge vier der Antennen umfasst.

17. Funkkommunikationsnetz, umfassend wenigstens eine Funkkommunikationsvorrichtung nach einem der Ansprüche 1 bis 16.

**EP 1 481 498 B1**

18. Funkkommunikationsnetz nach Anspruch 17, worin es eine Mehrzahl von Benutzerendgeräten umfasst, von denen jedes eine Funkkommunikationsvorrichtung nach einem der Ansprüche 1 bis 16 ist und, worin jede der Antennen an diesen Benutzerendgeräten dazu angeordnet ist, einen richtungsbezogenen Antennenstrahl bereitzustellen und, worin wenigstens einige dieser Antennenstrahlen in im wesentlichen andere Richtungen zeigen als die anderen Antennenstrahlen.

19. Verfahren, eine Funkkommunikationsvorrichtung zu betreiben, die drei oder mehr Diversantennen (21; 100; 404; 1001, 1002, 1003, 1004), eine Mehrzahl von Empfangsketten (22; 101; 405; 1005, 1006) und einen Selektor (102; 1008) umfasst, worin weniger Empfangsketten als Antennen vorliegen, wobei das Verfahren umfasst, für jede Empfangskette eine der Antennen zur Verwendung in Verbindung mit der Empfangskette auszuwählen, und das Verfahren **dadurch gekennzeichnet ist, dass** Ausgänge der Mehrzahl von Empfangsketten verwendet werden, um Multiple-Input-Multiple-Output-Kommunikationen vorzusehen.

20. Verfahren nach Anspruch 19, worin der Schritt des Auswählens ein Auswählen auf der Grundlage eines Signalstärkeanzeigers umfasst.

21. Verfahren nach Anspruch 19 oder 20, worin der Schritt des Auswählens ferner ein Auswählen auf der Grundlage von Parametern, die auf eines von einer Rahmenfehlerrate, einer Linkkapazität, Informationen einer zyklischen Redundanzprüfung und Eigenwerten einer Kanalproduktmatrix bezogen sind, umfasst.

22. Computerprogrammprodukt, umfassend ein computerlesbares Medium, das Programmcode trägt, der in einer Kommunikationsvorrichtung ausführbar ist, um das Verfahren nach einem der Ansprüche 19 bis 21 zu implementieren.

**Revendications**

1. Un dispositif de radiocommunication comprenant trois, ou plus, antennes à diversité (21; 100; 404; 1001, 1002, 1003, 1004) et une multiplicité de chaînes de réception (22; 101; 405; 1005, 1006), avec moins de chaînes de réception que d'antennes, ce dispositif de radiocommunication comprenant en outre un sélecteur (102; 1008) qui est agencé pour sélectionner, pour chacune de la multiplicité de chaînes de réception, l'une quelconque des antennes, pour l'utilisation conjointement à cette chaîne de réception, le dispositif de radiocommunication étant **caractérisé en ce qu'**il est agencé pour procurer des communications à entrées multiples, sorties multiples, en utilisant la multiplicité de chaînes de réception.

2. Un dispositif de radiocommunication selon la revendication 1, dans lequel chacune des antennes (21; 100; 404; 1001, 1002, 1003, 1004) est directionnelle.

3. Un dispositif de radiocommunication selon la revendication 1 ou 2, dans lequel la diversité des antennes (21; 100; 404; 1001, 1002, 1003, 1004) est obtenue par diversité spatiale et/ou diversité de polarisation.

4. Dispositif de radiocommunication selon l'une quelconque des revendications précédentes, comprenant une station de base ou un terminal d'utilisateur.

5. Dispositif de radiocommunication selon l'une quelconque des revendications précédentes, dans lequel le sélecteur (102; 1008) comprend un mécanisme de commutation agencé pour commuter les antennes (21; 100; 404; 1001, 1002, 1003, 1004) entre les chaînes de réception (22; 101; 405; 1005, 1006).

6. Un dispositif de radiocommunication selon la revendication 5, dans lequel le sélecteur (102; 1008) est agencé pour sélectionner des antennes (21; 100; 404; 1001, 1002, 1003, 1004) sur la base d'un paramètre lié à un processus de contrôle par redondance cyclique.

7. Un dispositif de radiocommunication selon la revendication 6, dans lequel le sélecteur (102; 1008) est en outre agencé pour sélectionner pour chaque chaîne de réception (22; 101; 405; 1005, 1006) l'une quelconque des antennes (21; 100; 404; 1001, 1002, 1003, 1004) qui n'est pas sélectionnée au moment présent pour l'utilisation conjointement à n'importe laquelle des chaînes de réception.

8. Un dispositif de radiocommunication selon l'une quelconque des revendications 1 à 5, dans lequel le sélecteur (102; 1008) est agencé pour effectuer une sélection sur la base d'un indicateur d'intensité de signal.

17

**9.** Un dispositif de radiocommunication selon l'une quelconque des revendications 1 à 5, dans lequel le sélecteur (102; 1008) est agencé pour sélectionner des antennes (21; 100; 404; 1001, 1002, 1003, 1004) sur la base de paramètres liés à l'un quelconque d'un taux d'erreurs de trame, d'une capacité de liaison et de valeurs propres d'une matrice produit de canal.

**10.** Un dispositif de radiocommunication selon l'une quelconque des revendications précédentes, dans lequel chacune des antennes (21; 100; 404; 1001, 1002, 1003, 1004) est agencée pour produire un faisceau d'antenne directionnel et dans lequel au moins certains de ces faisceau d'antenne ont des directions de pointage notablement différentes d'un autre des faisceaux d'antenne.

**11.** Un dispositif de radiocommunication selon l'une quelconque des revendications précédentes, comprenant quatre paires d'antennes, chaque paire d'antennes étant supportée par un corps qui a des dimensions et une forme telles qu'il soit portable et adapté pour être supporté sur une surface sensiblement plane.

**12.** Un dispositif de radiocommunication selon la revendication 11, dans lequel ledit corps est un parallélépipède et chaque paire d'antennes est supportée par une face différente du parallélépipède.

**13.** Un dispositif de radiocommunication selon la revendication 11 ou la revendication 12, dans lequel les antennes sont des dipôles.

**14.** Un dispositif de radiocommunication selon la revendication 13, dans lequel l'un de chaque paire de dipôles est agencé de façon que ses extrémités soient dirigées vers ledit corps.

**15.** Un dispositif de radiocommunication selon la revendication 13 ou la revendication 14, dans lequel le sélecteur (102; 1008) est agencé pour sélectionner un premier sous-ensemble des antennes pour l'émission et un second sous-ensemble des antennes pour la réception.

**16.** Un dispositif de radiocommunication selon la revendication 15, dans lequel le premier sous-ensemble comprend deux des antennes et le second sous-ensemble comprend quatre des antennes.

**17.** Un réseau de radiocommunication comprenant au moins un dispositif de radiocommunication selon l'une quelconque des revendications 1 à 16.

**18.** Un réseau de radiocommunication selon la revendication 17, comprenant une multiplicité de terminaux d'utilisateur, chacun d'eux étant un dispositif de radiocommunication selon l'une quelconque des revendications 1 à 16, et dans lequel chacune des antennes à ces terminaux d'utilisateur est agencée pour produire un faisceau d'antenne directionnel et dans lequel certains au moins de ces faisceaux d'antenne ont des directions de pointage notablement différentes de celle d'un autre des faisceaux d'antenne.

**19.** Un procédé pour faire fonctionner un dispositif de radiocommunication comprenant trois, ou plus, antennes à diversité (21; 100; 404; 1001, 1002, 1003, 1004), une multiplicité de chaînes de réception (22; 101; 405; 1005, 1006) et un sélecteur (102; 1008), dans lequel il y moins de chaînes de réception que d'antennes, le procédé comprenant la sélection, pour chaque chaîne de réception, de l'une quelconque des antennes pour l'utilisation conjointement à cette chaîne de réception, et le procédé étant **caractérisé par** l'utilisation de sorties de la multiplicité de chaînes de réception pour procurer des communications à entrées multiples, sorties multiples.

**20.** Un procédé selon la revendication 19, dans lequel l'étape de sélection comprend une sélection sur la base d'un indicateur d'intensité de signal.

**21.** Un procédé selon la revendication 19 ou la revendication 20, dans lequel l'étape de sélection comprend une sélection sur la base de paramètres liés à l'un quelconque d'un taux d'erreurs de trame, d'une capacité de liaison, d'une information de contrôle par redondance cyclique et de valeurs propres d'une matrice produit de canal.

**22.** Produit - programme d'ordinateur comprenant un support lisible par ordinateur portant un code de programme exécutable dans un dispositif de communication pour mettre en oeuvre le procédé de l'une quelconque des revendications 19 à 21.

PRIOR ART

FIGURE 1

Prior Art
Figure 2a

Figure 2b

MIMO configuration with 2 Node B antennas and 4 UE antennas

Figure 3

EP 1 481 498 B1

EP 1 481 498 B1

41 ——— Max Eig, best 2 from 4
42 ——— Min Eig, best 2 from 4
43 ---- 2:2 (standard), max Eig
44 ---- 2:2 standard, Min Eig

Comparison of eigenvalues for standard 2:2 MIMO and eigenvalue selection diversity (best 2 from 4) using the maximum sum of eigenvalues as the selection metric.

# Figure 4

Figure 5

1001  1002  1003  1004 Sub-MIMO switch matrix

1  2  3  4

(1,2)  (1,3)  (1,4)  (2,3)  (2,4)  (3,4)

GaAs MESFET Switch

1008

Receiver Front End

Receiver Front End

D/A

1005

1006

DSP/ASIC

Selection Criteria

1007

| 4-antenna | (1,2) (1,3) (1,4) (2,3) (2,4) (3,4) |
| | |
| | disjoint switch          example of overlap switch (keep Ant #1) |
| 6-antenna | (1,2) (1,3) (1,4) (1,5) (1,6) (2,3) (2,4) (2,5) (2,6) (3,4) (3,5) (3,6) (4,5) (4,6) (5,6) |
| | |
| | disjoint switch          example of overlap switch (keep Ant #1) |

# Figure 6

Figure 7

**Sub-MIMO Swtiching Comparision**
(STTD,ITU-VA, 100km/h, QPSK, R=1/3)

Figure 8

EP 1 481 498 B1

Figure 9

Figure 10

Figure 11

|  | Configuration 1 | | Configuration 2 | | | |
|---|---|---|---|---|---|---|
| Average signal level (dB) | 180° | 4.6 | 180° | 3.9 | | |
| | 90° | 6.7 | 90° | 4.8 | | |
| Signal level spread (dB) | 180° | 1.4 | 180° | 1.5 | | |
| | 90° | 0.5 | 90° | 0.3 | | |
| Average standard deviation (dB) | 180° | 4.1 | 180° | 1.7 | | |
| | 90° | 1.4 | 90° | 0.4 | | |
| Lowest maximum achievable diversity gain (dB) (unit 0° orientation) | 11.5 | | 15 | | | |
| Lowest maximum achievable diversity gain (dB) (unit 45° orientation) | 14.5 | | 14 | | | |

# Figure 12

EP 1 481 498 B1

Element 232 –
folded slot & 234 –
monopole, which are
nominally polarised
to -45°.

Elements 231 &
233 – umbrella
monopoles
polarised at
nominally +45°.

234

232

231

233

236

235

FIGURE 13

Figure 14

FIGURE 15